# EUROPEAN PATENT SPECIFICATION

(11) **EP 2 644 424 B1**
(45) Date of publication and mention of the grant of the patent: **14.06.2017**
(21) Application number: 13161224.4
(22) Date of filing: 27.03.2013
(51) Int. Cl.: B60J 10/277, B60J 10/76

(54) **Glass guide seal for the upper side of a window opening of a motor vehicle**
Glasführungsdichtung für die Oberseite einer Fensteröffnung eines Motorfahrzeugs
Joint de guidage de glace pour le côté supérieur d'une ouverture de fenêtre d'un véhicule automobile

(30) Priority: 27.03.2012 IT TO20120272
(43) Date of publication of application: 02.10.2013
(73) Proprietor: Cooper-Standard Automotive Italy S.p.A., 10073 Cirie' (Torino) (IT)
(72) Inventor: Pappalardo, Diego, I-84081 Baronissi (Salerno) (IT)
(74) Representative: Quinterno, Giuseppe

(56) References cited:
- EP-A1- 0 282 919
- JP-A- 2009 056 832
- US-B1- 6 185 869

## Description

The present invention relates to a glass guide seal arrangement for a window opening of a motor vehicle.

More specifically, the invention proposes a glass guide seal arrangement of the kind defined in the preamble of claim 1.

EP 0 282 919 A1 discloses a glass guide seal arrangement of the above-defined kind, wherein the inter-mediate or bridge portion of the seal joins the two anchoring portions through short connecting webs having a reduced cross-section, designed to allow the bridge portion to be pulled or torn off in the seal portion to be applied to the bottom side of a window opening of a motor-vehicle.

In use, as a result of various tolerances present in manufacturing, assembly and operation, the upper edge of the window glass may sometimes extend beyond the nominal closed position, thereby urging the vertical buffer wall of the intermediate portion of the seal upwards, with the risk of damaging it and/or opening and deforming the aforesaid anchoring terminal portions which may become detached from the lower edges of the side walls of said bearing structure.

In order to overcome this problem, it has been proposed that a rigid wall or bracket be provided for limited portions of the seal only, in the bearing structure of the upper side of the window opening, the aforesaid terminal buffer wall of the intermediate portion of the seal abutting against this wall or bracket, which is adapted to withstand the impact of the upper edge of the window glass when this glass extends beyond the nominal closed position, thereby limiting the amount of deformation of the seal.

However, this solution is relatively complicated and costly, and is not always effective.

One object of the present invention is therefore to provide a novel glass guide seal arrangement adapted to overcome the aforementioned problems of the prior art.

This and other objects are achieved according to the invention with a glass guide seal arrangement of the type specified above, having the features defined in claim 1.

The possible increased elongation of the intermediate portion of the seal enables the aforementioned problems of the prior art solutions to be overcome in a positive manner.

Further characteristics and advantages of the invention will become clear from the following detailed description which is given purely by way of non-limiting example with reference to the attached drawings, in which:
Figure 1 is a cross-sectional view of the bearing structure of the upper side of a window opening of a motor vehicle with a glass guide seal for an arrangement according to the present invention, shown in the non-deformed condition; and
Figure 2 is a view similar to that of Figure 1, and shows the seal in a deformed condition which is assumed when the window glass extends beyond the nominal terminal closed position.

In the drawings, the number 1 indicates the whole of a glass guide seal for the upper side of a window opening 2 of a motor vehicle, in which upper side there is provided a bearing structure 3, of a known type, essentially shaped like an inverted channel.

In the embodiment illustrated by way of example, the bearing structure 3 is formed in the upper side of a door of the motor vehicle, and comprises two opposite side walls 4 and 5, forming outer and inner walls respectively, between which a downwardly open recess or receptacle 6 is defined.

The glass guide seal 1 essentially comprises a profile member 7 of elastomeric material, preferably extruded in one piece.

The cross section of the profile member 7 has two essentially U-shaped anchoring terminal portions 8 and 9, which mate with the lower edges of the side walls 4 and 5 of the bearing structure 3.

The profile member 7 further comprises an intermediate portion, indicated as a whole by 10, which is positioned, in use, in the recess or receptacle 6 of the bearing structure 3 and which, like this recess or receptacle, is shaped in the form of an inverted channel.

This intermediate portion 10 of the seal has a terminal buffer wall 11, to whose ends respective opposite side walls 12, 13 are joined.

A window glass 14, movable in an essentially vertical direction, can extend between said side walls 12 and 13.

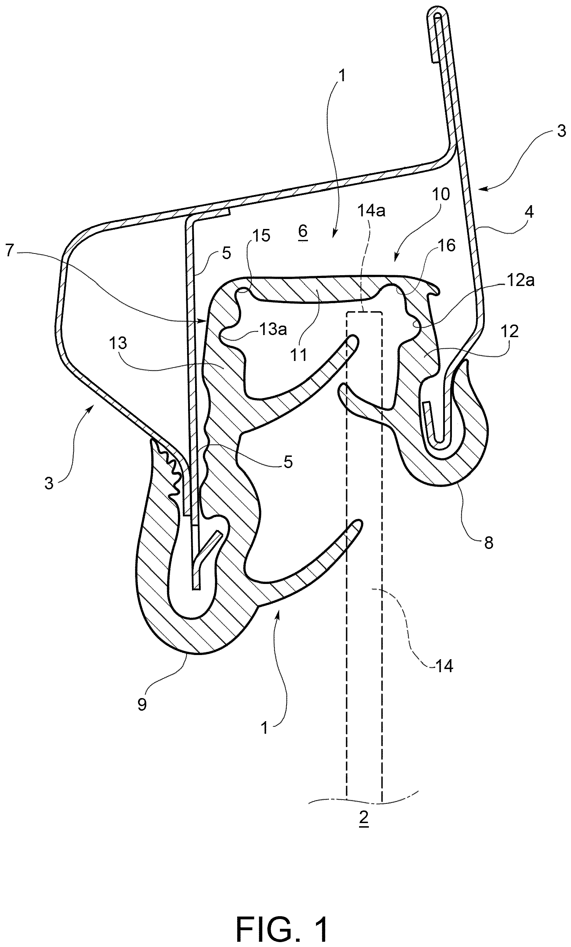

In the nominal closed position, shown in Figure 1, the upper edge 14a of the window glass 14 extends in the proximity of, or adjacent to, the lower face of the buffer wall 11.

According to the present invention, the side walls 12 and 13 of the intermediate portion 10 of the seal 1 have respective portions or parts 12a and 13a which have a substantially reduced cross section, and which are therefore resiliently extensible like springs.

The thinner portions or parts 12a, 13a are preferably formed by making longitudinal grooves or recesses in the walls 12 and 13, facing the inside of the intermediate portion 10 of the seal.

Conveniently, but not necessarily, said side walls 12 and 13 of the intermediate portion 10 of the seal are joined to the end of the terminal buffer wall 11 through further portions or parts of reduced cross section 15, 16, operating like hinges. The provision of these thinner portions or parts 15 and 16 is particularly useful if the seal 1 as a whole is extruded in a linearized configuration, rather than in the configuration shown in Figure 1. In this case, the thinner portions or parts 15 and 16 act as hinges, thus facilitating the bending of the side walls 12, 13 relative to the terminal buffer wall 11.

It should be noted, however, that the behaviour of the thinner parts 15 and 16, where present, is entirely different from that of the thinner portions or parts 12a and 13a of the side walls 12 and 13. This is because, while the thinner parts 15 and 16 act as hinges, subjected to bending stresses in use, the thinner portions or parts 12a and 13a of the walls 12 and 13 act as resilient elements which are stressed mainly in traction.

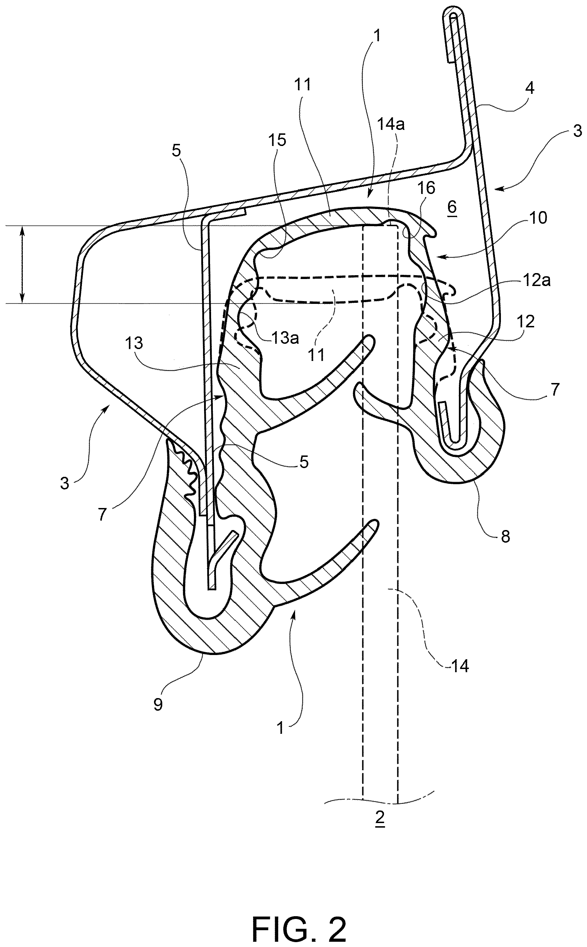

Figure 2 shows in a qualitative manner the deformation of the intermediate portion 10 of a seal 1 according to the present invention, when the upper edge 14a of the window glass 14 extends beyond the nominal closed position: this glass 14 urges the terminal buffer wall 11 of the seal upwards, thereby subjecting the side walls 12 and 13 to traction. The thinner portions or parts 12a, 13a of the latter then undergo marked resilient extension, allowing a considerable increase in the overall resilient extension of the intermediate portion 10 of the seal, thereby preventing any damage thereto and/or deformation and possible damage of the anchoring terminal portions 8 and 9.

Preferably, the thinner portions or parts 12a and 13a of the side walls 12 and 13 are formed in the proximity of the terminal buffer wall 11.

Clearly, provided that the principle of the invention is retained, the forms of application and the details of embodiment, and also the number of the thinner portions, can be varied widely from what has been described and illustrated purely by way of non-limiting example, without thereby departing from the scope of protection of the invention as defined by the attached claims.

## Claims

1. Glass guide seal arrangement (1; 3) for the upper side of a window opening (2) of a motor vehicle, comprising
a bearing structure (3) shaped like an inverted channel, which is provided in said upper side of the window opening (2) and which defines a downwardly open recess or receptacle (6), between two opposite side walls (4, 5); and
a seal (1) comprising a profile member (7) of an elastomeric or thermoplastic material, whose cross section includes
two anchoring terminal portions (8, 9) intended to mate with the lower edges of the side walls (4, 5) of said bearing structure (3), and
an intermediate portion (10), likewise shaped as an inverted channel, intended to be positioned in said recess or receptacle (6) and having a terminal buffer wall (11) the ends of which join with respective, opposite, side walls (12, 13), between which a movable glass window pane (14) can extend, the upper edge (14a) of which in the nominal closed position extends adjacent to said terminal buffer wall (11);
said side walls (12, 13) of the intermediate portion (10) having respective portions or parts (12a, 13a) which have a reduced cross section;
**characterized in that** the arrangement (1; 3) is such that when, in use, the upper edge (14a) of the glass window pane (14) goes beyond the nominal closed position and urges said terminal buffer wall (11) upwards, said portions or parts of reduced cross section (12a, 13a) are mainly stressed in traction, extend resiliently like springs and allow an increased resilient extension of the intermediate portion (10) of the seal (1).

2. Glass guide seal arrangement according to Claim 1, wherein said portions or parts of reduced cross section (12a, 13a) of the side walls (12, 13) of the intermediate portion (10) of the seal (1) are provided close to said terminal buffer wall (11).

3. Glass guide seal arrangement according to either of the preceding claims, wherein said portions or parts of reduced cross section (12a, 13a) of the side walls (12, 13) of the intermediate portion (10) of the seal (1) are made in the form of longitudinal recesses of said side walls (12, 13), facing towards the inside of the strip (1).

4. Glass guide seal arrangement according to any of the preceding claims, wherein the ends of said terminal buffer wall (11) are joined to the adjacent side walls (12, 13) of the intermediate portion (10) of the seal (1) through further portions or parts of reduced cross section (15, 16) adapted to operate like hinges.

5. Glass guide seal arrangement according to any of the preceding claims, wherein the seal (1) is made in one piece as an extruded profile member.

## Patentansprüche

1. Glasführungsdichtungsanordnung (1; 3) für die Oberseite einer Fensteröffnung (2) eines Kraftfahrzeugs, mit
einer Tragstruktur (3), die ähnlich einem umgedrehten Kanal geformt ist, die in der Oberseite der Fensteröffnung (2) vorgesehen ist und die eine nach unten offene Aussparung oder Aufnahme (6) zwischen zwei gegenüberliegenden Seitenwänden (4, 5) festlegt; und
einer Dichtung (1), die ein Profilelement (7) aus einem elastomerischen oder thermoplastischen Material aufweist, dessen Querschnitt aufweist
zwei Verankerungsanschlussbereiche (8, 9), die angedacht sind, dass sie mit den unteren Rändern der Seitenwände (4, 5) der Tragstruktur (3) zusammenpassen, und
einen Zwischenbereich (10), der ähnlich wie ein umgedrehter Kanal geformt ist, der angedacht ist, dass er in der Aussparung oder Aufnahme (6) positioniert wird, und der eine Anschlussanschlagwand (11) aufweist, deren Enden mit entsprechenden gegenüberliegenden Seitenwänden (12, 13) verbunden sind, zwischen denen sich eine bewegliche Fensterglasscheibe (14) erstrecken kann, deren oberer Rand (14a) sich in der nominalen geschlossenen Position an die Anschlussanschlagwand (11) angrenzend erstreckt;
wobei die Seitenwände (12, 13) des Zwischenbereichs (10) entsprechende Bereiche oder Teile (12a, 13a) aufweisen, die einen reduzierten Querschnitt aufweisen;
**dadurch gekennzeichnet, dass** die Anordnung (1; 3) derart ist, dass, wenn in Verwendung, der obere Rand (14a) der Fensterglasscheibe (14) über die nominale geschlossene Position hinausgeht und die Anschlussanschlagwand (11) nach oben drängt, die Bereiche oder Teile von reduziertem Querschnitt (12a, 13a) hauptsächlich auf Zug belastet werden, sich elastisch wie Federn erstrecken und eine erhöhte elastische Ausdehnung des Zwischenbereichs (10) der Dichtung (1) ermöglichen.

2. Glasführungsdichtungsanordnung nach Anspruch 1, bei der die Bereiche oder Teile von reduziertem Querschnitt (12a, 13a) der Seitenwände (12, 13) des Zwischenbereichs (10) der Dichtung (1) nahe der Anschlussanschlagwand (11) vorgesehen sind.

3. Glasführungsdichtungsanordnung nach jedem der vorhergehenden Ansprüche, bei der die Bereiche oder Teile von reduziertem Querschnitt (12a, 13a) der Seitenwände (12, 13) des Zwischenbereichs (10) der Dichtung (1) in der Form von Längsaussparungen der Seitenwände (12, 13), die auf die Innenseite des Streifens (1) gerichtet sind, hergestellt sind.

4. Glasführungsdichtungsanordnung nach einem der vorhergehenden Ansprüche, bei der die Enden der Anschlussanschlagwand (11) mit den angrenzenden Seitenwänden (12, 13) des Zwischenbereichs (10) der Dichtung (1) durch weitere Bereiche oder Teile von reduziertem Querschnitt (15, 16) verbunden sind, die angepasst sind, dass sie wie Scharniere funktionieren.

5. Glasführungsdichtungsanordnung nach einem der vorhergehenden Ansprüche, bei der die Dichtung (1) in einem Stück als ein extrudiertes Profilelement hergestellt ist.

## Revendications

1. Agencement de joint (1 ; 3) de guide (1 ; 3) pour vitrage, pour le côté supérieur d'une ouverture de fenêtre (2) d'un véhicule automobile, comprenant
une structure porteuse (3) présentant une forme de canal inversé, dont est pourvu ledit côté supérieur de l'ouverture de fenêtre (2) et qui définit, entre deux parois latérales opposées (4, 5), un évidement ou réceptacle ouvert vers le bas (6) ; et
un joint (1) comprenant un élément de profil (7) en élastomère ou en matériau thermoplastique, dont la section transversale inclut
deux portions terminales d'ancrage (8, 9) destinées à s'emboîter avec les bords inférieurs des parois latérales (4, 5) de ladite structure porteuse (3), et
une portion intermédiaire (10), ayant de même la forme d'un canal inversé, destinée à être positionnée dans ledit évidement ou réceptacle (6) et ayant une paroi tampon terminale (11) dont les extrémités rejoignent des parois latérales opposées (12, 13) respectives, entre lesquelles un panneau de fenêtre en verre (14) mobile peut s'étendre, dont le bord supérieur (14a) s'étend, dans la position fermée nominale, de manière adjacente à ladite paroi tampon terminale (11) ;
lesdites parois latérales (12, 13) de la portion intermédiaire (10) comportant des portions ou parties respectives (12a, 13a) qui ont une section transversale réduite ;
**caractérisé en ce que** l'agencement (1 ; 3) est tel que lorsque, en cours d'utilisation, le bord supérieur (14a) du panneau de fenêtre en verre (14) passe au-delà de la position fermée nominale et pousse ladite paroi tampon terminale (11) vers le haut, lesdites portions ou parties de section transversale réduite (12a, 13a) sont principalement sollicitées en traction, s'étendent de manière élastique comme des ressorts et autorisent une extension élastique accrue de la portion intermédiaire (10) du joint (1).

2. Agencement de joint de guide pour vitrage selon la revendication 1, dans lequel lesdites portions ou parties de section transversale réduite (12a, 13a) des parois latérales (12, 13) de la portion intermédiaire (10) du joint (1) sont proches de ladite paroi tampon terminale (11).

3. Agencement de joint de guide pour vitrage selon l'une ou l'autre des revendications précédentes, dans lequel lesdites portions ou parties de section transversale réduite (12a, 13a) des parois latérales (12, 13) de la portion intermédiaire (10) du joint (1) sont réalisées sous forme d'évidements longitudinaux desdites parois latérales (12, 13), tournés vers l'intérieur de la bande (1).

4. Agencement de joint de guide pour vitrage selon l'une quelconque des revendications précédentes, dans lequel les extrémités de ladite paroi tampon terminale (11) sont jointes aux parois latérales adjacentes (12, 13) de la portion intermédiaire (10) du joint (1) par le biais de portions ou parties de section transversale réduite additionnelles (15, 16) adaptées pour fonctionner comme des ressorts.

5. Agencement de joint de guide pour vitrage selon l'une quelconque des revendications précédentes, dans lequel le joint (1) est formé d'une seule pièce comme un élément profilé extrudé.
